# EUROPEAN PATENT SPECIFICATION

(11) **EP 4 135 403 B1**
(45) Date of publication and mention of the grant of the patent: **01.05.2024**
(21) Application number: 22189445.4
(22) Date of filing: 09.08.2022
(51) Int. Cl.: H04W 36/00, H04W 76/12, H04W 76/22

(54) **ENHANCED 3GPP SESSION ESTABLISHMENT PROCEDURE**
VERBESSERTES 3GPP-SITZUNGSAUFBAUVERFAHREN
PROCÉDURE D'ÉTABLISSEMENT DE SESSION 3GPP AMÉLIORÉE

(30) Priority: 12.08.2021 US 202163232286 P; 08.07.2022 US 202217860759
(43) Date of publication of application: 15.02.2023
(73) Proprietor: MediaTek Inc., Hsinchu City 30078 (TW)
(72) Inventor: HUANG-FU, Chien-Chun, Hsinchu City (TW); LIN, Yu-Hsin, Hsinchu City (TW)
(74) Representative: Habermann, Hruschka & Schnabel

(56) References cited:
- US-A1- 2019 313 276
- NOKIA ET AL: "3GPP TSG-CT WG1 Meeting #107; C1-175396; Session management in the single-registration mode interworking", 3GPP DRAFT; C1-175396, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Reno (USA); 20171127 - 20171201 1 December 2017 (2017-12-01), XP051362821, Retrieved from the Internet: URL:http://www.3gpp.org/ftp/Meetings%5F3GP P%5FSYNC/CT1/updates/update14/ [retrieved on 2017-12-01]
- ERICSSON: "3GPP TSG-CT WG1 Meeting #128-e; C1-210708; ECS address provisioning support indication in ePCO", 3GPP DRAFT; C1-210708, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Electronic meeting; 20210225 - 20210305 17 February 2021 (2021-02-17), XP051976323, Retrieved from the Internet: URL:https://ftp.3gpp.org/tsg_ct/WG1_mm-cc- sm_ex-CN1/TSGC1_128e/Docs/C1-210708.zip C1-210708-ecs-address-support-indication-p co-24501-v03.docx [retrieved on 2021-02-17]
- MEDIATEK INC: "3GPP TSG-CT WG1 Meeting #131-e; C1-214458; Non-IP MTU request in the PDU session establishment procedure", 3GPP DRAFT; C1-214458, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. E-meeting; 20210819 - 20210827 12 August 2021 (2021-08-12), XP052040438, Retrieved from the Internet: URL:https://ftp.3gpp.org/tsg_ct/WG1_mm-cc- sm_ex-CN1/TSGC1_131e/Docs/C1-214458.zip C1-214458_24.501_Non-IP MTU.docx [retrieved on 2021-08-12]
- MEDIATEK INC: "3GPP TSG-CT WG1 Meeting #131-e; C1-214459; Unstructured link MTU request in the default EPS bearer context activation procedure", 3GPP DRAFT; C1-214459, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. E-meeting; 20210819 - 20210827 12 August 2021 (2021-08-12), XP052040439, Retrieved from the Internet: URL:https://ftp.3gpp.org/tsg_ct/WG1_mm-cc- sm_ex-CN1/TSGC1_131e/Docs/C1-214459.zip C1-214459_24.301_Unstructured MTU.docx [retrieved on 2021-08-12]
- MEDIATEK INC: "3GPP TSG-CT WG1 Meeting #131-e; C1-214453; +CGCONTRDP amendment to indicate the PDP type", 3GPP DRAFT; C1-214453, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. E-meeting; 20210819 - 20210827 12 August 2021 (2021-08-12), XP052040433, Retrieved from the Internet: URL:https://ftp.3gpp.org/tsg_ct/WG1_mm-cc- sm_ex-CN1/TSGC1_131e/Docs/C1-214453.zip C1-214453_27.007_CGCONTRDP with PDP type.docx [retrieved on 2021-08-12]

## Description

### TECHNICAL FIELD

The disclosed embodiments relate generally to wireless communication in 5G networks, and, more particularly, to enhanced PDU SESSION and PDN CONNECTION establishment procedure.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems (5GS).

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. Each PDU session is identified by a PDU session ID (PSI), and may include multiple QoS flows and QoS rules.

Under intersystem change, a PDU session in 5G can be transferred to a PDN connection in 4G, and vice versa. In one example, a PDU session of "Ethernet" or "Unstructured" PDU session type can be transferred to a PDN connection of "non-IP" PDN type after interworking from N1 mode to S1 mode. A UE is aware of the MTU of Ethernet link and Unstructured link, but not aware of the MTU of non-IP link. Similarly, a PDN connection of "non-IP" PDN type can be transferred to a PDU session of "Unstructured" PDU session type after interworking from S1 mode to N1 mode. The UE is aware of the MTU of non-IP link but not aware of the MTU of Unstructured link. Further, the upper layer of the UE is does not know the PDU/PDN type change.
Methods facing such problems are e.g. known from the following publications NOKIA et al.: "3GPP TSG-CT WG1 Meeting #107; C1-175396; Session management in the single-registration mode interworking", 3GPP DRAFT; and C1-175396, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. CT WG1, no. Reno (USA); 20171127 - 20171201 1 December 2017; and ERICSSON: "3GPP TSG-CT WG1 Meeting #128-e; C1-210708; ECS address provisioning support indication in ePCO", 3GPP DRAFT; and C1-210708, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Electronic meeting; 20210225 - 20210305 17 February 2021.

A solution is sought.

### SUMMARY

The invention is defined by the subject-matter of the independent claims.

Preferred embodiments are set out in the dependent claims.

An enhanced session establishment procedure is proposed for Maximum Transmission Unit (MTU) parameter handling under intersystem change between 5GS and EPS. A PDU session of "Ethernet" or "Unstructured" PDU session type can be transferred to a PDN connection of "non-IP" PDN type, thus the UE can request the non-IP link MTU parameter in the PDU session establishment procedure. The non-IP link MTU size corresponds to the maximum length of user data that can be sent either in the user data container in the ESM DATA TRANSPORT message or via S1-U interface. A PDN connection of "non-IP" PDN type can be transferred to a PDU session of "Unstructured" PDU session type, thus the UE can request the Unstructured link MTU parameter in the UE-requested PDN connectivity procedure. The Unstructured link MTU size correspond to the maximum length of user data packet that can be sent either via the control plane or via N3 interface for a PDU session of the Unstructured PDU session type.

In one embodiment, a UE transmits a PDU session establishment request to establish a PDU session in N1 mode in a mobile communication network. The PDU session establishment request comprises a request for a maximum transmission unit (MTU) parameter for an Ethernet or an Unstructured link in N1 mode and an MTU parameter for a non-IP link in S1 mode. The UE receives the MTU parameter for the Ethernet or Unstructured link and the MTU parameter for the non-IP link from the network. The UE performs an intersystem change from N1 mode to S1 mode. The PDU session is transferred to a corresponding PDN connection in S1 mode. The UE sends non-IP packets over the PDN connection based on the MTU parameter for the non-IP link in S1 mode of the PDN connection.

In another embodiment, a UE transmits a PDN connection establishment request to establish a PDN connection in S1 mode in a mobile communication network. The PDN connection establishment request comprises a request for a maximum transmission unit (MTU) parameter for a non-IP link in S1 mode and an MTU parameter for an unstructured link in N1 mode. The UE receives the MTU parameter for the non-IP link and the MTU parameter for the Unstructured link and from the network. The UE performs an intersystem change from S1 mode to N1 mode. The PDN connection is transferred to a corresponding PDU session in N1 mode. The UE sends unstructured packets over the PDU session based on the MTU parameter for the Unstructured link of the PDU session in N1 mode.

Other embodiments and advantages are described in the detailed description below. This summary does not purport to define the invention.

### BRIEF DESCRIPTION OF THE DRAWINGS

The accompanying drawings, where like numerals indicate like components, illustrate embodiments of the invention.
Figure 1 illustrates an enhanced 3GPP session establishment procedure for MTU parameter handling under intersystem change between 5GS and EPS in accordance with one novel aspect.
Figure 2 illustrates a simplified block diagram of an architecture comprising a Terminal Equipment (TE) and a Mobile Termination (MT) in accordance with one novel aspect.
Figure 3 illustrates a message flow of a PDU session established in 5G converting to a PDN connection in 4G and corresponding MTU size and PDP type determination by the UE in one novel aspect.
Figure 4 illustrates a message flow of a PDN connection established in 4G converting to a PDU session in 5G and corresponding MTU size and PDP type determination by the UE in one novel aspect.
Figure 5 is an example of using an AT command for querying PDP type under intersystem change in accordance with a novel aspect.
Figure 6 illustrates a flow chart of a method for MTU size determination under intersystem change from N1 mode to S1 mode in accordance with one novel aspect.
Figure 7 illustrates a flow chart of a method for MTU size determination under intersystem change from S1 mode to N1 mode in accordance with one novel aspect.

### DETAILED DESCRIPTION

Reference will now be made in detail to some embodiments of the invention, examples of which are illustrated in the accompanying drawings.

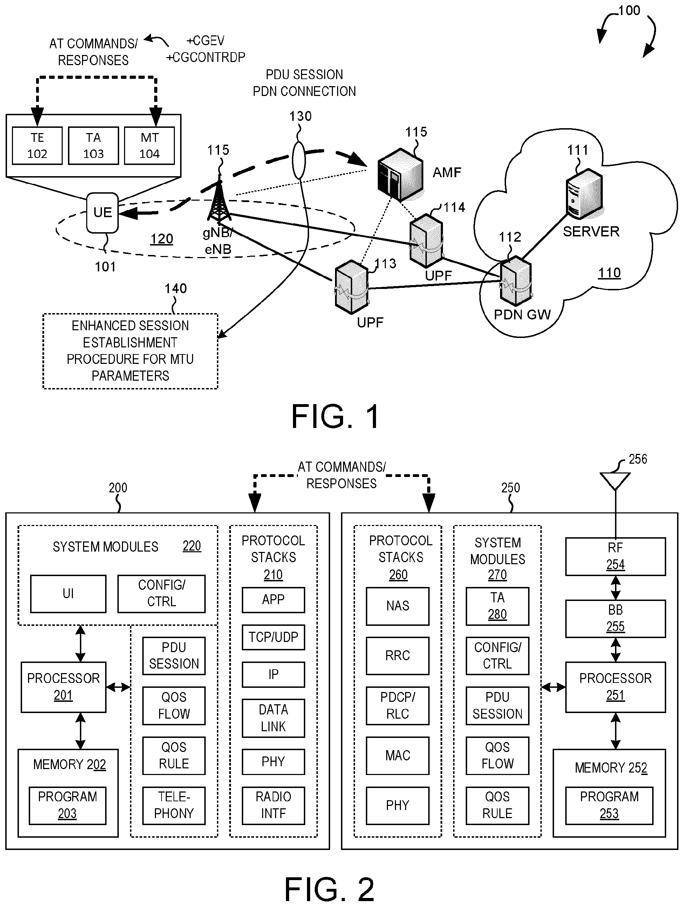

Figure 1 illustrates an enhanced 3GPP session establishment procedure for Maximum Transmission Unit (MTU) parameter handling under intersystem change between 5GS and EPS in accordance with one novel aspect. 5GS/EPS 100 includes application server 111 that provides various services by communicating with a plurality of User Equipments (UEs) including UE 101. In the example of Figure 1, application server 111 and a Packet Data Network Gateway (PDN GW) 112 belong to part of a 5G core or evolved packet core network 5GC/EPC 110. UE 101 and its serving base station gNB/eNB 102 belong to part of a Radio Access Network (RAN) 120. RAN 120 provides radio access for UE 101 via a Radio Access Technology (RAT) (e.g., the 5G NR or 4G LTE). Application server 111 communicates with UE 101 through PDN GW 112, one or more User Plane Functions (UPFs) 113 and 114, and gNB/eNB 102. An Access and Mobility Management Function (AMF) 115 communicates with gNB/eNB 102, UPF 113/114 and PDN GW 112 for access and mobility management of wireless access devices in 5GS/EPS network 100. UE 101 may be equipped with a Radio Frequency (RF) transceiver or multiple RF transceivers for different application services via different RATs/CNs. For example, UE 101 may be a smart phone, a wearable device, an Internet of Things (IoT) device, and a tablet, etc. Alternatively, UE 101 may be a Notebook (NB) or Personal Computer (PC) inserted or installed with a data card which includes a modem and RF transceiver(s) to provide the functionality of wireless communication.

In 4G evolved packet system (EPS), a Packet Data Network (PDN) connectivity procedure is an important process when LTE communication system accesses to the packet data network. The purpose of PDN connectivity procedure is to setup a default EPS bearer between a UE and the packet data network. In 5G, a Protocol Data Unit (PDU) session establishment is a parallel procedure of the PDN connectivity procedure in 4G. A PDU session defines the association between the UE and the data network that provides a PDU connectivity service. Each PDU session is identified by a PDU session ID (PSI), and may include multiple QoS flows and QoS rules.

Under intersystem change, a PDU session in 5G can be transferred to a PDN connection to 4G, and vice versa (e.g., PDU session/PDN connection 130). In one example, a PDU session of "Ethernet" or "Unstructured" PDU session type can be transferred to a PDN connection of "non-IP" PDN type after interworking. A UE is aware of the MTU of Ethernet link and Unstructured link, but not aware of the MTU of non-IP link. Similarly, a PDN connection of "non-IP" PDN type can be transferred to a PDU session of "Unstructured" PDU session type after interworking from S1 mode to N1 mode. The UE is aware of the MTU of non-IP link but not aware of the MTU of Unstructured link. Without knowing the actual MTU size, if a data packet size exceeds the MTU, then the data packet will either be segmented or dropped. Further, the upper layer of the UE is not able to know the PDP type change of the type of packet data protocol upon intersystem change without indication from lower layer of the UE.

In accordance with one novel aspect, an enhanced session establishment procedure (140) is proposed for MTU parameter handling under intersystem change between 5GS and EPS. When establishing the PDN connection/PDU session 130, UE 101 should also request the MTU size value for the target PDN/PDU type after inter-system change. In 5GS, a PDU session of "Ethernet" or "Unstructured" PDU session type can be transferred to a PDN connection of "non-IP" PDN type, thus the UE can request the non-IP link MTU parameter in the PDU session establishment procedure. In EPS, a PDN connection of "non-IP" PDN type can be transferred to a PDU session of "Unstructured" PDU session type, thus the UE can request the Unstructured link MTU parameter in the PDN connectivity procedure.

Further, the upper layer of UE 101 can query for the current PDU/PDN type via an AT command. AT commands are used for controlling Mobile Termination (MT) functions and GSM/UMTS network services from a Terminal Equipment (TE) through Terminal Adaptor (TA). The AT commands can be a notification of an unsolicited result code, or a configuration command. Specifically, the AT command can be a notification of an unsolicited result code (URC) for indicating the change of PDU/PDN type. In Figure 1, for example, MT104 sends a URC +CGEV to TA 103 indicating the change of PDU/PDN type, and then receives an AT command +CGCONTRDP from TE 102 for querying the PDU/PDN type. In response, MT 104 sends an MT status back to TA 103, which converts to a response to be sent to TE 102, indicating the current PDU/PDN type.

Figure 2 illustrates a simplified block diagram of an architecture comprising a Terminal Equipment (TE) and a Mobile Termination (MT) in accordance with one novel aspect. TE 200 includes a processor 201, memory 202, and protocol stacks 210 including Application (APP) layer, Transport (TCP/UDP) layer, Network (IP) layer, Data Link layer, and Physical (PHY) layer. TE 200 further includes system control modules and circuits 220 including a user interface, a configuration and control module, a PDU session handler, a QoS flow handler, a QoS rule handler, and a telephony module. Processor 201 processes different applications and invokes different system control modules to perform various features of TE 200. Memory 202 stores program instructions and data 203 to control the operations of TE 200. The system control modules and circuits can be implemented and configured to carry out functional tasks of TE 200. Note that TE 200 may also be referred to as an Application Processor (AP). Typically, TE 200 is also equipped with telephony framework circuits (e.g., a dialer, a call manager etc.) to support voice call functionality. In addition, TE 200 also supports the AT commands as defined by 3GPP TS 27.007 for controlling MT functions and GPRS packet domain services based on contexts for each PDP/PDN/PDU session identified by CID.

MT 250 has an antenna 256, which transmits and receives radio signals. An RF transceiver module 254, coupled with the antenna, receives RF signals from antenna 256, converts them to baseband signals and sends them to processor 251 via baseband module 255. RF transceiver 254 also converts received baseband signals from processor 251 via baseband module 255, converts them to RF signals, and sends out to antenna 256. Processor 251 processes the received baseband signals and invokes different functional modules to perform features in MT 250. Memory 252 stores program instructions and data 253 to control the operations of MT 250. MT 250 also comprises a set of protocol stacks 260 and control circuits including various system modules 270 to carry out functional tasks of MT 250. Protocol stacks 260 includes Non-Access-Stratum (NAS) layer, Radio Resource Control (RRC) layer, Packet Data Convergence Protocol/Radio Link Control (PDCP/RLC) layer, Media Access Control (MAC) layer, and Physical (PHY) layer. System modules 270 includes a configuration module, a control module, a PDU session handler, a QoS flow handler, and a QoS rule handler. Note that MT 250 may also be referred to as a modem. In the example of Figure 2, MT 250 further includes a Terminal Adaptor (TA 280) that receives and transmits AT commands and converts the AT commands to be processed by processor 251 for controlling MT functions. In one example, TA 280 receives an AT read command from TE 200 for MT 250 to provide the current PDU/PDN type after intersystem change to TE 200.

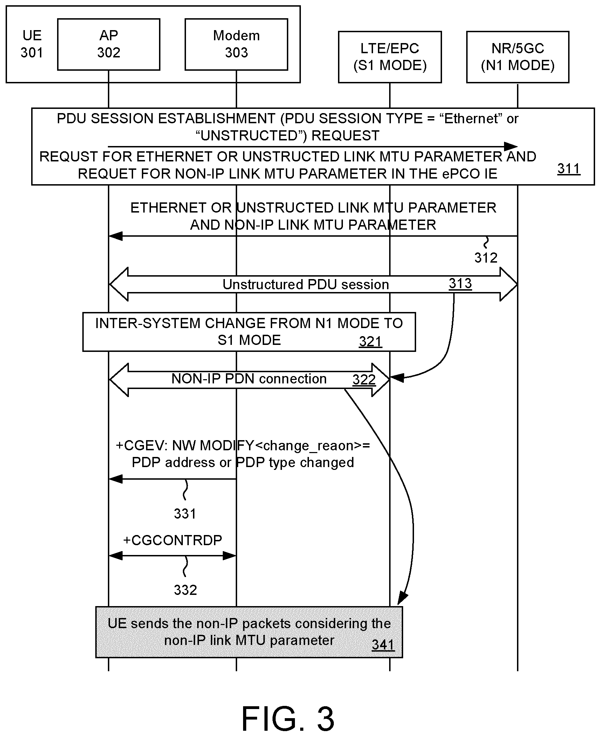

Figure 3 illustrates a message flow of a PDU session established in 5G converting to a PDN connection in 4G and corresponding MTU size and PDP type determination by the UE in one novel aspect. UE 301 comprises an AP 302 and a modem 303. In step 311, UE 301 performs a PDU session establishment procedure with NR 5GC (N1 mode). During the PDU session establishment procedure, UE 301 sends a PDU session establishment request message, with PDU session type = "Ethernet" or "Unstructured", to the 5GC. Typically, the request message comprises a request for an Ethernet link or an Unstructured link MTU parameter (e.g., in the PCO/ePCO IE). However, the "Ethernet" or "Unstructured" PDU session type can be transferred to a PDN connection of "non-IP" PDN type later on.

In one novel aspect, UE 301 also requests the non-IP link MTU parameter for a corresponding PDN connection in the PDU session establishment procedure, e.g., carried by the same PDU session establishment request message in step 311. In step 312, in response, the 5GC sends a PDU session establishment accept message back to UE 301, with the requested MTU parameters for an Ethernet or Unstructured link in N1 mode and MTU parameters for a non-IP link in S1 mode. In step 313, a PDU session with Unstructured PDU session type is established. UE 301 knows the MTU size for the Unstructured link type of the PDU session and can send Unstructured packets under the MTU size accordingly. The Unstructured link MTU size correspond to the maximum length of user data packet that can be sent either via the control plane or via N3 interface for the PDU session of the Unstructured PDU session type.

In step 321, UE 301 performs an intersystem change from N1 mode in 5GS to S1 mode in EPS. As a result, the PDU session is transferred to a corresponding PDN connection with a non-IP PDN type (step 322). In step 331, modem 303 sends a URC +CGEV to AP 302 indicating the change of PDP type. In step 332, modem 303 receives an AT command +CGCONTRDP from AP 302 for querying the PDU/PDN type. In response, modem 303 sends an MT status back to AP 302 for providing the PDU/PDN type. When UE knows that PDN/PDU type has changed to non-IP link, UE can then consider the corresponding non-IP MTU. Since UE 301 already obtained the non-IP link MTU parameter for the PDN connection in step 312, UE 301 can send non-IP packets considering the non-IP link MTU parameter (341).

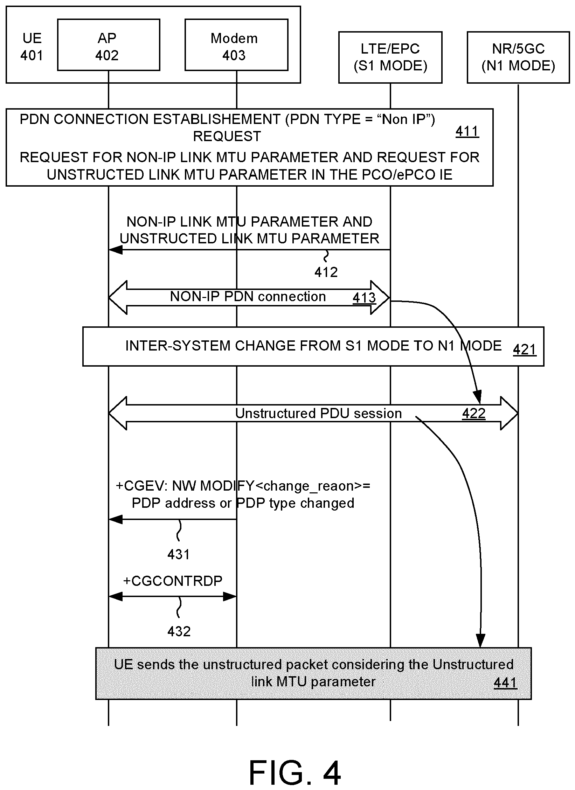

Figure 4 illustrates a message flow of a PDN connection established in 4G converting to a PDU session in 5G and corresponding MTU size and PDP type determination by the UE in one novel aspect. UE 401 comprises an AP 402 and a modem 403. In step 411, UE 401 performs a PDN connectivity procedure with 4G EPC (S1 mode). During the PDN connection establishment procedure, UE 401 sends a PDN connection establishment request message, with PDN connection type = "non-IP", to the EPC. Typically, the request message comprises a non-IP link MTU parameter (e.g., in the PCO/ePCO IE). However, the "non-IP" PDN connection type can be transferred to a PDU session of "Unstructured" PDU session type later on.

In one novel aspect, UE 401 also requests the Unstructured link MTU parameter for a corresponding PDU session in the PDN connectivity establishment procedure, e.g., carried by the same PDN connectivity request message in step 411. In step 412, in response, the EPC sends a PDU connectivity accept message back to UE 401, with the requested MTU parameters for a non-IP link in S1 mode and MTU parameters for an Unstructured link in N1 mode. In step 413, a PDN connection with non-IP PDN type is established. UE 401 knows the MTU size for the non-IP link type of the PDN connection and can send non-IP packets under the MTU size accordingly. The non-IP link MTU size corresponds to the maximum length of user data that can be sent either in the user data container in the ESM DATA TRANSPORT message or via S1-U interface.

In step 421, UE 401 performs an intersystem change from S1 mode in EPS to N1 mode in 5GS. As a result, the PDN connection is transferred to a corresponding PDU session with an Unstructured PDU session type (step 422). In step 431, modem 403 of UE 401 sends a URC +CGEV to AP 402 of UE 401 indicating the change of PDP type. In step 432, modem 403 receives an AT command +CGCONTRDP from AP 402 for querying the PDU/PDN type. In response, modem 403 sends an MT status back to AP 402 for providing the PDU/PDN type. When UE knows that PDN/PDU type has changed to Unstructured link, UE can then consider the corresponding Unstructured link MTU. Since UE 401 already obtained the Unstructured link MTU parameter for the PDU session in step 412, UE 401 can send Unstructured packets considering the Unstructured link MTU parameter (441).

In an alternative embodiment, after inter-system change, if the PDN/PDU type is changed, the UE should request for the corresponding MTU size via proper NAS procedures, e.g., 5GSM/ESM modification procedure with PCO/ePCO IE, or 5GSM/ESM status message. In another alternative embodiment, UE can re-use the original PDN/PDU type MTU after intersystem change. For example, from N1 to S1 mode, UE can use Ethernet MTU in N1 mode upon performing intersystem change to S1 mode; from S1 to N1 mode, UE can use non-IP MTU in S1 mode upon performing inter-system change to N1 mode.

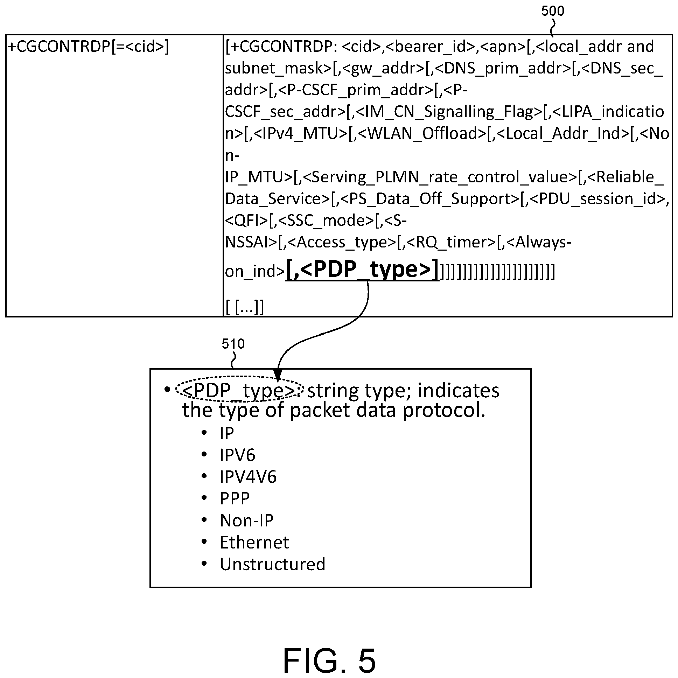

Figure 5 is an example of using an AT command for querying PDP type under intersystem change in accordance with a novel aspect. The PDU session and corresponding session management functionality can be provided towards the applications and the terminal devices using an Application Programming interface (API) based on Packet Data Protocol (PDP) contexts. A PDP context can be regarded as a data record of parameters that characterize a specific bearer and connection to the target PDN. As depicted in table 510, the <PDP_type> is represented as a string and can be used to indicate the PDP type of a PDN connection (e.g., non-IP) or a PDU session (e.g., Ethernet, or Unstructured).

For external applications, the session management functionality may be provided through an AT command API in accordance with 3GPP TS 27.007 "AT command set for User Equipment (UE)". AT commands are used for controlling Mobile Termination (MT) functions and GSM/UMTS network services from a Terminal Equipment (TE) through Terminal Adaptor (TA). In one example, the AT command can be a notification of an unsolicited result code (URC) for indicating the change of PDU/PDN type. For example, a URC +CGEV can be used to indicate the change of PDU/PDN type. After intersystem change from 5GS to EPS or vice versa, the upper layer of the UE does not know the PDP context modification and the actual PDU/PDN type. The lower layer can use URC +CGEV with <change reason> set to "PDP address or PDP type changed" sent from the lower layer to the upper layer of the UE. Upon receiving the URC, the upper layer then uses an AT command +CGCONTRDP to query the PDU/PDN type. As depicted in table 500, the AT command +CGCONTRDP is amended to indicate the <PDP_type> that includes the packet data protocol type.

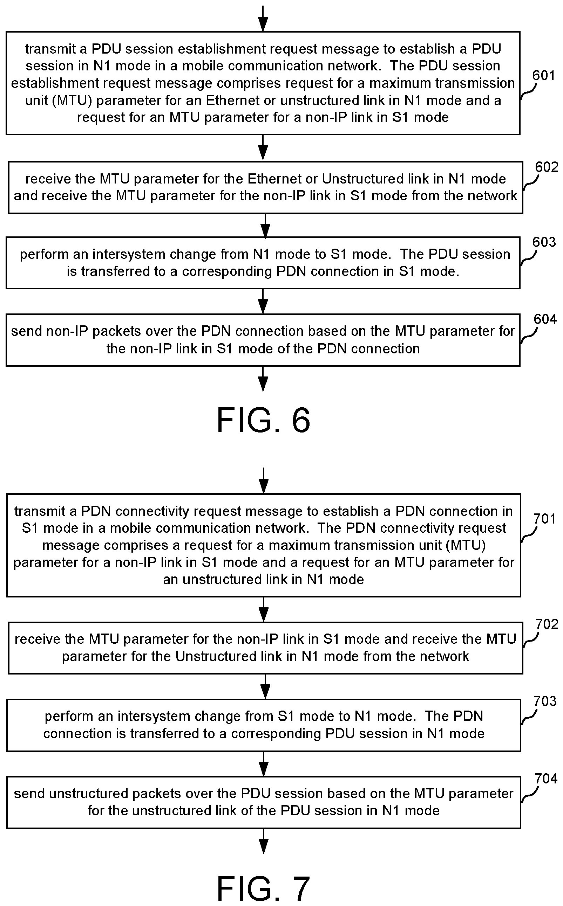

Figure 6 illustrates a flow chart of a method for MTU size determination under intersystem change from N1 mode to S1 mode in accordance with one novel aspect. In step 601, a UE transmits a PDU session establishment request message to establish a PDU session in N1 mode in a mobile communication network. The PDU session establishment request message comprises a request for a maximum transmission unit (MTU) parameter for an Ethernet or an Unstructured link in N1 mode and a request for an MTU parameter for a non-IP link in S1 mode. In step 602, the UE receives the MTU parameter for the Ethernet or Unstructured link in N1 mode and receives the MTU parameter for the non-IP link in S1 mode from the network. In step 603, the UE performs an intersystem change from N1 mode to S1 mode. The PDU session is transferred to a corresponding PDN connection in S1 mode. In step 604, the UE sends non-IP packets over the PDN connection based on the MTU parameter for the non-IP link in S1 mode of the PDN connection. Further, an Attention (AT) command is provided by a modem to an Application Processor (AP) upon the intersystem change from N1 mode to S1 mode, and the AP can query the PDP type accordingly.

Figure 7 illustrates a flow chart of a method for MTU size determination under intersystem change from S1 mode to N1 mode in accordance with one novel aspect. In step 701, a UE transmits a PDN connectivity request message to establish a PDN connection in S1 mode in a mobile communication network. The PDN connectivity request message comprises a request for a maximum transmission unit (MTU) parameter for a non-IP link in S1 mode and a request for an MTU parameter for an unstructured link in N1 mode. In step 702, the UE receives the MTU parameter for the non-IP link in S1 mode and receives the MTU parameter for the Unstructured link in N1 mode from the network. In step 703, the UE performs an intersystem change from S1 mode to N1 mode. The PDN connection is transferred to a corresponding PDU session in N1 mode. In step 704, the UE sends unstructured packets over the PDU session based on the MTU parameter for the Unstructured link of the PDU session in N1 mode. Further, an Attention (AT) command is provided by a modem to an Application Processor (AP) upon the intersystem change from S1 mode to N1 mode, and the AP can query the PDP type accordingly.

## Claims

1. A method, performed by a user equipment, UE (101), comprising:
transmitting (601) a PDU session establishment request message from the UE (101) to establish a PDU session in N1 mode in a mobile communication network, wherein the PDU session establishment request message comprises a request for a maximum transmission unit, MTU, parameter for an Ethernet or an Unstructured link in N1 mode and a request for an MTU parameter for a non-IP link in S1 mode;
receiving (602) the MTU parameter for the Ethernet or Unstructured link in N1 mode and receiving the MTU parameter for the non-IP link in S1 mode from the network;
performing (603) an intersystem change from N1 mode to S1 mode, wherein the PDU session is transferred to a corresponding PDN connection in S1 mode; and
sending (604) non-IP packets over the PDN connection based on the MTU parameter for the non-IP link in S1 mode of the PDN connection.

2. The method of Claim 1, wherein the PDU session has an Ethernet or an Unstructured PDU session type in N1 mode.

3. The method of Claim 1, wherein the corresponding PDN connection has a non-IP PDN connection type in S1 mode.

4. The method of Claim 1, wherein the corresponding PDN connection in S1 mode is configured with the MTU parameter for the non-IP link as requested during the PDU session establishment in N1 mode.

5. The method of Claim 1, further comprising:
providing an Attention, AT, command by a modem comprised in the UE (101) to an Application Processor, AP, comprised in the UE (101) upon the intersystem change from N1 mode to S1 mode; and
wherein the AT command is an unsolicited result code, URC, +CGEV indicating a change of a PDP type.

6. The method of Claim 5, wherein the AP sends a second AT command +CGCONTRDP to the modem to query for the changed PDP type.

7. A method, performed by a user equipment, UE (101), comprising:
transmitting (701) a PDN connectivity request message from the UE (101) to establish a PDN connection in S1 mode in a mobile communication network, wherein the PDN connectivity request message comprises a request for a maximum transmission unit, MTU, parameter for a non-IP link in S1 mode and a request for an MTU parameter for an Unstructured link in N1 mode;
receiving (702) the MTU parameter for the non-IP link in S1 mode and receiving the MTU parameter for the Unstructured link in N1 mode from the network;
performing (703) an intersystem change from S1 mode to N1 mode, wherein the PDN connection is transferred to a corresponding PDU session in N1 mode; and
sending (704) unstructured packets over the PDU session based on the MTU parameter for the Unstructured link of the PDU session in N1 mode.

8. The method of Claim 7, wherein the PDN connection has a non-IP PDN connection type in S1 mode.

9. The method of Claim 7, wherein the corresponding PDU session has a an Unstructured PDU session type in N1 mode.

10. The method of Claim 7, wherein the corresponding PDU session in N1 mode is configured with the MTU parameter for the Unstructured link as requested during the PDN connectivity procedure in S1 mode.

11. The method of Claim 7, further comprising:
providing an Attention, AT, command by a modem comprised in the UE (101) to an Application Processor, AP, comprised in the UE (101) upon the intersystem change from S1 mode to N1 mode; and
wherein the AT command is an unsolicited result code, URC, +CGEV indicating a change of a PDP type.

12. The method of Claim 11, wherein the AP sends a second AT command +CGCONTRDP to the modem to query for the changed PDP type.

13. A User Equipment, UE (101), comprising means adapted to carry out the steps of the method of any of claims 1-6 or the step of the method of any of claims 7-12:
comprising a session or connection handling circuit that is adapted to establish a PDU session in N1 mode (601) or a PDN connection in S1 mode (701) by sending a request message in a mobile communication network, wherein the request message comprises a request for a maximum transmission unit, MTU, parameter for an Unstructured link in N1 mode and a request for an MTU parameter for a non-IP link in S1 mode;
a receiver that is adapted to receive the MTU parameter for the Unstructured link in N1 mode (602) and receives the MTU parameter for the non-IP link in S1 mode (702);
an intersystem handling circuit that is adapted to perform intersystem change from N1 mode to S1 mode (603) or from S1 mode to N1 mode (703), wherein the PDU session is transferred to a corresponding PDN connection in S1 mode, or the PDN connection in S1 mode is transferred to a corresponding PDU session in N1 mode; and
a transmitter that is adapted to send non-IP packets over the PDN connection based on the MTU parameter for the non-IP link in S1 mode of the PDN connection (604), or otherwise sends unstructured packets over the PDU session based on the MTU parameter for the Unstructured link of the PDU session in N1 mode (704).

14. The UE of Claim 13, wherein the PDU session has an Unstructured PDU session type in N1 mode.

15. The UE of Claim 13, wherein the corresponding PDN connection has a non-IP PDN connection type in S1 mode.

16. The UE of Claim 13, wherein the corresponding PDN connection in S1 mode is configured with the MTU parameter for the non-IP link as requested during the PDU session establishment in N1 mode.

17. The UE of Claim 13, wherein the corresponding PDU session in N1 mode is configured with the MTU parameter for the Unstructured link as requested during the PDN connectivity procedure in S1 mode.

18. The UE of Claim 13, further comprising:
an Application Processor, AP, and a modem;
the modem being adapted to send an unsolicited result code, URC, +CGEV to indicate a change of a PDP type upon the intersystem change to the AP; and
the AP being adapted to send a second AT command +CGCONTRDP to the modem to query for the changed PDP type in response to the URC.

## Patentansprüche

1. Verfahren, das von einem Benutzergerät, UE (101), durchgeführt wird, aufweisend:
Senden (601) einer PDU-Sitzungsaufbau-Anforderungsnachricht vom UE (101), um eine PDU-Sitzung im N1-Modus in einem Mobilkommunikationsnetz aufzubauen, wobei die PDU-Sitzungsaufbau-Anforderungsnachricht eine Anforderung eines Parameters für eine maximale Übertragungseinheit, MTU, für eine Ethernet- oder eine unstrukturierte Verbindung im N1-Modus und eine Anforderung eines MTU-Parameters für eine Nicht-IP-Verbindung im S1-Modus aufweist;
Empfangen (602) des MTU-Parameters für die Ethernet- oder unstrukturierte Verbindung im N1-Modus und Empfangen des MTU-Parameters für die Nicht-IP-Verbindung im S1-Modus vom Netzwerk;
Durchführen (603) eines systemübergreifenden Wechsels vom N1-Modus zum S1-Modus, wobei die PDU-Sitzung zu einer entsprechenden PDN-Verbindung im S1-Modus übertragen wird; und
Senden (604) von Nicht-IP-Paketen über die PDN-Verbindung basierend auf dem MTU-Parameter für die Nicht-IP-Verbindung im S1-Modus der PDN-Verbindung.

2. Verfahren nach Anspruch 1, bei dem die PDU-Sitzung einen Ethernet- oder einen unstrukturierten PDU-Sitzungstyp im N1-Modus hat.

3. Verfahren nach Anspruch 1, bei dem die entsprechende PDN-Verbindung einen Nicht-IP-PDN-Verbindungstyp im S1-Modus hat.

4. Verfahren nach Anspruch 1, bei dem die entsprechende PDN-Verbindung im S1-Modus mit dem MTU-Parameter für die Nicht-IP-Verbindung konfiguriert wird, wie er während des PDU-Sitzungsaufbaus im N1-Modus angefordert wurde.

5. Verfahren nach Anspruch 1, des Weiteren aufweisend:
Bereitstellen eines AT(Attention)-Befehls durch ein im UE (101) enthaltenes Modem an einen im UE (101) enthaltenen Anwendungsprozessor, AP, beim Wechsel vom N1-Modus in den S1-Modus; und
wobei der AT-Befehl ein unaufgeforderter Ergebniscode, URC, +CGEV ist, der eine Änderung eines PDP-Typs anzeigt.

6. Verfahren nach Anspruch 5, bei dem der AP einen zweiten AT-Befehl +CGCONTRDP an das Modem sendet, um den geänderten PDP-Typ abzufragen.

7. Verfahren, das von einem Benutzergerät UE (101) durchgeführt wird, aufweisend:
Senden (701) einer PDN-Konnektivitätsanforderungsnachricht vom UE (101), um eine PDN-Verbindung im S1-Modus in einem Mobilkommunikationsnetz aufzubauen, wobei die PDN-Konnektivitätsanforderungsnachricht eine Anforderung eines Parameters für eine maximale Übertragungseinheit, MTU, für eine Nicht-IP-Verbindung im S1-Modus und eine Anforderung eines MTU-Parameters für eine unstrukturierte Verbindung im N1-Modus aufweist;
Empfangen (702) des MTU-Parameters für die Nicht-IP-Verbindung im S1-Modus und Empfangen des MTU-Parameters für die unstrukturierte Verbindung im N1-Modus vom Netzwerk;
Durchführen (703) eines systemübergreifenden Wechsels vom S1-Modus zum N1-Modus, wobei die PDN-Verbindung zu einer entsprechenden PDU-Sitzung im N1-Modus übertragen wird; und
Senden (704) von unstrukturierten Paketen über die PDU-Sitzung, basierend auf dem MTU-Parameter für die unstrukturierte Verbindung der PDU-Sitzung im N1-Modus.

8. Verfahren nach Anspruch 7, bei dem die PDN-Verbindung einen Nicht-IP-PDN-Verbindungstyp im S1-Modus hat.

9. Verfahren nach Anspruch 7, bei dem die entsprechende PDU-Sitzung einen unstrukturierten PDU-Sitzungstyp im N1-Modus hat.

10. Verfahren nach Anspruch 7, bei dem die entsprechende PDU-Sitzung im N1-Modus mit dem MTU-Parameter für die unstrukturierte Verbindung konfiguriert wird, wie er während des PDU-Sitzungsaufbaus im S1-Modus angefordert wurde.

11. Verfahren nach Anspruch 7, des Weiteren aufweisend:
Bereitstellen eines AT(Attention)-Befehls durch ein im UE (101) enthaltenes Modem an einen im UE (101) enthaltenen Anwendungsprozessor, AP, beim systemübergreifenden Wechsel vom S1-Modus in den N1-Modus; und
wobei der AT-Befehl ein unaufgeforderter Ergebniscode, URC, +CGEV ist, der eine Änderung eines PDP-Typs anzeigt.

12. Verfahren nach Anspruch 11, bei dem der AP einen zweiten AT-Befehl +CGCONTRDP an das Modem sendet, um den geänderten PDP-Typ abzufragen.

13. Benutzergerät, UE (101), aufweisend Mittel, die geeignet sind, die Schritte des Verfahrens nach einem der Ansprüche 1 bis 6 oder die Schritte des Verfahrens nach einem der Ansprüche 7 bis 12 auszuführen:
aufweisend
eine Sitzungs- oder Verbindungshandhabungsschaltung, die angepasst ist, um eine PDU-Sitzung im N1-Modus (601) oder eine PDN-Verbindung im S1-Modus (701) durch Senden einer Anforderungsnachricht in einem Mobilkommunikationsnetz aufzubauen, wobei die Anforderungsnachricht eine Anforderung eines Parameters für eine maximale Übertragungseinheit, MTU, für eine unstrukturierte Verbindung im N1-Modus und eine Anforderung für einen MTU-Parameter für eine Nicht-IP-Verbindung im S1-Modus aufweist;
einen Empfänger, der angepasst ist, um den MTU-Parameter für die unstrukturierte Verbindung im N1-Modus (602) und den MTU-Parameter für die Nicht-IP-Verbindung im S1-Modus (702) zu empfangen;
eine Systemwechsel-Handhabungsschaltung, die angepasst ist, um einen systemübergreifenden Wechsel vom N1-Modus zum S1-Modus (603) oder vom S1-Modus zum N1-Modus (703) durchzuführen, wobei die PDU-Sitzung zu einer entsprechenden PDN-Verbindung im S1-Modus übertragen wird oder die PDN-Verbindung im S1-Modus zu einer entsprechenden PDU-Sitzung im N1-Modus übertragen wird; und
einen Sender, der so angepasst ist, dass er Nicht-IP-Pakete über die PDN-Verbindung auf der Grundlage des MTU-Parameters für die Nicht-IP-Verbindung im S1-Modus der PDN-Verbindung (604) sendet, oder ansonsten unstrukturierte Pakete über die PDU-Sitzung auf der Grundlage des MTU-Parameters für die unstrukturierte Verbindung der PDU-Sitzung im N1-Modus (704) sendet.

14. UE nach Anspruch 13, bei dem die PDU-Sitzung einen unstrukturierten PDU-Sitzungstyp im N1-Modus hat.

15. UE nach Anspruch 13, bei dem die entsprechende PDN-Verbindung im S1-Modus einen Nicht-IP-PDN-Verbindungstyp hat.

16. UE nach Anspruch 13, bei dem die entsprechende PDN-Verbindung im S1-Modus mit dem MTU-Parameter für die Nicht-IP-Verbindung konfiguriert ist, wie er während des PDU-Sitzungsaufbaus im N1-Modus angefordert wurde.

17. UE nach Anspruch 13, bei dem die entsprechende PDU-Sitzung im N1-Modus mit dem MTU-Parameter für die unstrukturierte Verbindung konfiguriert ist, wie er während des PDN-Verbindungaufbaus im S1-Modus angefordert wurde.

18. UE nach Anspruch 13, des Weiteren aufweisend:
einen Anwendungsprozessor, AP, und ein Modem;
wobei das Modem so angepasst ist, dass es einen unaufgeforderten Ergebniscode URC +CGEV sendet, um eine Änderung eines PDP-Typs beim systemübergreifenden Wechsel an den AP anzuzeigen; und
wobei der AP so angepasst ist, dass er einen zweiten AT-Befehl +CGCONTRDP an das Modem sendet, um den geänderten PDP-Typ als Antwort auf den URC abzufragen.

## Revendications

1. Procédé mis en oeuvre par un dispositif utilisateur, UE (101), comprenant:
transmettre (601) d'un message de demande d'établissement de session PDU depuis l'UE (101) pour établir une session PDU en mode N1 dans un réseau de communication mobile, le message de demande d'établissement de session PDU comprenant une demande d'un paramètre d'unité de transmission maximale, MTU, pour une connexion Ethernet ou non structurée en mode N1 et une demande d'un paramètre MTU pour une connexion non IP en mode S1;
recevoir (602) le paramètre MTU pour la connexion Ethernet ou non structurée en mode N1 et recevoir du réseau le paramètre MTU pour la connexion non IP en mode S1;
effectuer (603) une commutation inter-systèmes du mode N1 au mode S1, la session PDU étant transférée à une connexion PDN correspondante dans le mode S1; et
envoyer (604) des paquets non-IP sur la connexion PDN en se basant sur le paramètre MTU pour la connexion non-IP en mode S1 de la connexion PDN.

2. Procédé selon la revendication 1, dans lequel la session PDU a un type Ethernet ou une session PDU non structurée en mode N1.

3. Procédé selon la revendication 1, dans lequel la connexion PDN correspondante a un type de connexion PDN non IP en mode S1.

4. Procédé selon la revendication 1, dans lequel la connexion PDN correspondante est configurée en mode S1 avec le paramètre MTU pour la connexion non-IP tel que demandé pendant l'établissement de la session PDU en mode N1.

5. Procédé selon la revendication 1, comprenant en outre:
la fourniture d'une instruction, AT, par un modem inclus dans l'UE (101) à un processeur d'application, AP, inclus dans l'UE (101) lors du passage du mode N1 au mode S1; et
où l'instruction AT est un code de résultat non sollicité, URC, +CGEV, qui indique une modification d'un type de PDP.

6. Procédé selon la revendication 5, dans lequel l'AP envoie une deuxième commande AT +CGCONTRDP au modem pour demander le type de PDP modifié.

7. Procédé mis en oeuvre par un dispositif utilisateur UE (101), comprenant:
transmettre (701) d'un message de demande de connectivité PDN depuis l'UE (101) pour établir une connexion PDN en mode S1 dans un réseau de communication mobile, le message de demande de connectivité PDN comprenant une demande d'un paramètre d'unité de transmission maximale, MTU, pour une connexion non IP en mode S1 et une demande d'un paramètre MTU pour une connexion non structurée en mode N1;
recevoir (702) le paramètre MTU pour la connexion non-IP en mode S1 et recevoir du réseau le paramètre MTU pour la connexion non structurée en mode N1;
effectuer (703) une commutation inter-systèmes du mode S1 au mode N1, la connexion PDN étant transférée à une session PDU correspondante dans le mode N1; et
envoyer (704) de paquets non structurés via la session PDU, en fonction du paramètre MTU pour la connexion non structurée de la session PDU en mode N1.

8. Procédé selon la revendication 7, dans lequel la connexion PDN a un type de connexion PDN non IP en mode S1.

9. Procédé selon la revendication 7, dans lequel la session PDU correspondante a un type de session PDU non structurée en mode N1.

10. Procédé selon la revendication 7, dans lequel la session PDU correspondante est configurée en mode N1 avec le paramètre MTU pour la connexion non structurée, tel que demandé pendant l'établissement de la session PDU en mode S1.

11. Procédé selon la revendication 7, comprenant en outre :
la fourniture d'une instruction, AT, par un modem inclus dans l'UE (101) à un processeur d'application, AP, inclus dans l'UE (101) lors du passage inter-système du mode S1 au mode N1; et
où l'instruction AT est un code de résultat non sollicité, URC, +CGEV, qui indique une modification d'un type de PDP.

12. Procédé selon la revendication 11, dans lequel l'AP envoie une deuxième commande AT +CGCONTRDP au modem pour demander le type de PDP modifié.

13. Dispositif utilisateur, UE (101), comprenant des moyens aptes à mettre en œuvre les étapes du procédé selon l'une des revendications 1 à 6 ou les étapes du procédé selon l'une des revendications 7 à 12:
comprenant
un circuit de gestion de session ou de connexion adapté pour établir une session PDU en mode N1 (601) ou une connexion PDN en mode S1 (701) en envoyant un message de demande dans un réseau de communication mobile, le message de demande comprenant une demande d'un paramètre d'unité de transmission maximale, MTU, pour une connexion non structurée en mode N1 et une demande d'un paramètre MTU pour une connexion non IP en mode S1;
un récepteur adapté pour recevoir le paramètre MTU pour la connexion non structurée en mode N1 (602) et le paramètre MTU pour la connexion non IP en mode S1 (702);
un circuit de manipulation de changement de système adapté pour effectuer un changement inter-système du mode N1 au mode S1 (603) ou du mode S1 au mode N1 (703), la session PDU étant transférée à une connexion PDN correspondante en mode S1 ou la connexion PDN en mode S1 étant transférée à une session PDU correspondante en mode N1; et
un émetteur adapté pour envoyer des paquets non-IP sur la connexion PDN sur la base du paramètre MTU pour la connexion non-IP en mode S1 de la connexion PDN (604), ou sinon pour envoyer des paquets non structurés sur la session PDU sur la base du paramètre MTU pour la connexion non structurée de la session PDU en mode N1 (704).

14. UE selon la revendication 13, dans lequel la session PDU a un type de session PDU non structurée en mode N1.

15. UE selon la revendication 13, dans lequel la connexion PDN correspondante en mode S1 est d'un type de connexion PDN non-IP.

16. UE selon la revendication 13, dans lequel la connexion PDN correspondante est configurée en mode S1 avec le paramètre MTU pour la connexion non-IP, tel que demandé pendant l'établissement de la session PDU en mode N1.

17. UE selon la revendication 13, dans lequel la session PDU correspondante est configurée en mode N1 avec le paramètre MTU pour la connexion non structurée, tel que demandé pendant l'établissement de la connexion PDN en mode S1.

18. UE selon la revendication 13, comprenant en outre:
un processeur d'application, AP, et un modem;
dans lequel le modem est adapté pour envoyer un code de résultat non sollicité URC +CGEV pour indiquer un changement d'un type de PDP lors d'un changement inter-système vers l'AP; et
l'AP étant adapté pour envoyer une deuxième commande AT +CGCONTRDP au modem afin de demander le type de PDP modifié en réponse à l'URC.
